(19) Europäisches Patentamt
European Patent Office
Office européen des brevets

(11) **EP 4 650 983 A1**

(12) **EUROPEAN PATENT APPLICATION**

(43) Date of publication:
**19.11.2025 Bulletin 2025/47**

(21) Application number: **24305767.6**

(22) Date of filing: **16.05.2024**

(51) International Patent Classification (IPC):
**G06F 16/55** (2019.01)  **G06N 3/045** (2023.01)
**G06N 3/0464** (2023.01)  **G06N 3/0495** (2023.01)
**G06N 3/0895** (2023.01)  **G06N 3/09** (2023.01)

(52) Cooperative Patent Classification (CPC):
**G06N 3/0464; G06F 16/55; G06N 3/045;**
**G06N 3/0495; G06N 3/0895; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA
Aichi-ken 471-8571 (JP)**
• **The University Court Of
The University of Edinburgh
Edinburgh EH8 9YL (GB)**

(72) Inventors:
• **MEIER, Sven
1140 Brussels (BE)**
• **DESPINOY, Fabien
1140 Brussels (BE)**
• **BHUNIA, Ankan Kumar
Edinburgh, EH8 9YL (GB)**
• **BILEN, Hakan
Edinburgh, EH8 9YL (GB)**
• **LI, Changjian
Edinburgh, EH8 9YL (GB)**

(74) Representative: **Cabinet Beau de Loménie
103, rue de Grenelle
75340 Paris Cedex 07 (FR)**

(54) **ANOMALY DETECTION SYSTEM AND METHOD**

(57) A system (20) for identifying an anomaly in an instance of an object, given an input (12) representing the instance and a reference model (10) of the object, the system (20) being configured to:
- extract features from the input and the reference model;
- input the features to an attention-based machine learning model (40) configured to detect a mismatch between the input and the reference model;
- identify an anomaly in the instance when said mismatch is detected.

FIG. 1

**Description**

BACKGROUND OF THE INVENTION

1. Field of the invention

The present disclosure relates to the field of anomaly detection and machine learning, and particularly to a system and method for identifying an anomaly in an instance of an object. The system and method may find applications in all kinds of industries, including the automotive industry. For instance, the system and method may be used in the context of computer vision and/or safety-critical applications to understand a vehicle's environment in order to adequately control the vehicle, or to monitor and support human activities in places such as a factory. For example, the system and method may find applications in inspection and quality control.

2. Description of Related Art

Anomaly detection (AD), namely identifying instances that are irregular or significantly deviate from the normality, is an actively studied problem in several fields. For instance, in conventional vision AD benchmarks, 'irregularities' are typically caused by either high-level (or semantic) variations such as presence of objects from unseen categories, defects on objects such as scratches or dents, low-level variations in color, shape, size, or pixel-level noise.

The standard approach has been learning representations and/or classifiers that are robust to the variations within the regular set of instances, and, at the same time, sensitive to the ones causing irregularities. However, this paradigm performs poorly when the irregularities are arbitrary and conditional to the context and/or individual characteristics of the instance which may not be known in prior or observed. For instance, 'chair' as an object category contains visually very diverse instances with huge intra-class variation. In this category, having three legs may imply a missing leg and hence an anomaly for a chair instance, and regularity for another instance. The anomaly detection here depends on whether the chair instance was originally designed and produced to have three legs. Likewise, in another example, whether temperature changes are anomalous can be more accurately determined based on a particular spatial and temporal context.

Thus, there is a need for a new type of method for identifying an anomaly in an instance of an object.

The following references give further background information about machine learning:

[REF. 1] Ashish Vaswani, Noam Shazeer, Niki Parmar, Jakob Uszkoreit, Llion Jones, Aidan N Gomez, Lukasz Kaiser, and Illia Polosukhin. Attention is all you need. In NeurIPS, 2017.

[REF. 2] Tsung-Yi Lin, Piotr Dollar, Ross Girshick, Kaiming He, Bharath Hariharan, and Serge Belongie. Feature pyramid networks for object detection. In CVPR, 2017.

[REF. 3] Alexey Dosovitskiy, Lucas Beyer, Alexander Kolesnikov, Dirk Weissenborn, Xiaohua Zhai, Thomas Unterthiner, Mostafa Dehghani, Matthias Minderer, Georg Heigold, Sylvain Gelly, et al. An image is worth 16x16 words: Transformers for image recognition at scale. In ICLR, 2021.

[REF. 4] Kaichun Mo, Shilin Zhu, Angel X Chang, Li Yi, Subarna Tripathi, Leonidas J Guibas, and Hao Su. Partnet: A large-scale benchmark for fine-grained and hierarchical part-level 3D object understanding. In CVPR, 2019.

[REF. 5] Nikolas Lamb, Sean Banerjee, and Natasha Kholgade Banerjee. Deepjoin: Learning a joint occupancy, signed distance, and normal field function for shape repair. In ACM TOG, 2022.

SUMMARY

In this respect, the present disclosure relates to a system for identifying an anomaly in an instance of an object, given an input representing the instance and a reference model of the object, the system being configured to:

- extract features from the input and the reference model;
- input the features to an attention-based machine learning model configured to detect a mismatch between the input and the reference model;
- identify an anomaly in the instance when said mismatch is detected.

The instance of the object is a specimen of the object, whereas the reference model of the object defines what the object should be. The instance may be made (e.g. manufactured or otherwise constructed) according to the reference model. However, the instance may contain anomalies (e.g. defects) that it is desired to identify. The reference model provides a reference for what the object should ideally be, and hence a clear definition of regularity or normality of the instance.

The input represents all or part of the instance of the object. Depending on the nature of the object, the format of the input may be chosen appropriately, as detailed below. The input may be acquired from the instance of the object, using any suitable sensor (e.g. camera, microphone, electrodes, etc.).

The reference model may belong to a different space than the input, thus possibly containing more information about the object that the input which is merely a representation of the instance. For example, in the case of physical objects, the reference model may include 3-dimensional (3D) data whereas the input only includes two-dimensional (2D) data. In another example, the reference model may be a full soundtrack whereas the input may only be a sound snippet.

The system may include a processor configured to carry out the recited functions. In embodiments, the system may have the hardware structure of a computer.

The features are extracted from the input and the reference model. The features may be extracted by a feature extractor or encoder, such as a neural network model. The type of encoder may depend on the format of the input and the reference model; for instance, if at least one of the input or the refence model is an image, a convolutional neural network (CNN) may be used as an encoder.

An attention-based machine learning model is a machine learning model that uses at least one attention mechanism, as known per se in the art ([REF 1]). Attention mechanisms focus on the salient part of the features relative to the target task. Typically, attention mechanisms emphasize the regions of interest which are often crucial to carry out that task. For example, the attention-based machine learning model may be a Transformer-based machine learning model.

As used herein, for conciseness and unless the context indicates otherwise, "a", "an", and "the" are intended to refer to "at least one" or "each" and to include plural forms as well.

By extracting features from both the input and the reference model and inputting these features to the attention-based machine learning model, the proposed system can be trained to explicitly learn the correspondence between an input and a reference model via feature alignment and leverage an attention mechanism for anomaly detection, in order to detect a possible mismatch between the input and the reference model. Accordingly, identification of anomalies is enhanced as compared to methods which do not take a reference model of the object into account.

Optionally, the extracting features from the reference model comprises generating at least one reference representation from the reference model, the at least one reference representation having the same dimensionality as the input, and extracting features from the at least one reference representation.

The at least one reference representation having the same dimensionality as the input does not necessarily mean that they have the same dimensions, but that they belong to a same space (e.g. a 2D image space). As they belong to the same space, their respective features can be extracted, compared and processed more easily to detect the mismatch. This helps bridging the domain gap between the reference model and the instance, which may in general belong to different spaces.

As the case may be, the mismatch may be detected between the input and the at least one reference representation.

Although a single reference representation is contemplated to bridge the domain gap, a plurality of reference representations conveys richer information about the reference model of the object.

Optionally, the features are extracted from the input and the reference model by a common feature encoder. Therefore, training is facilitated and a greater consistency is ensured between the features of the reference model and the features of the input. As the case may be, the common feature encoder may take as an input the reference representations instead of the reference model, thus working from the same input space as the input representing the instance of the object.

Optionally, the attention-based machine learning model comprises a self-attention module. In self-attention, the inputs of the self-attention module interact with one another to determine what they should pay more attention to, and the outputs of the self-attention module are aggregates of these interactions and attention scores. Thus, the self-attention module learns the correlation between different portions of the input to refine the features of the input. As a result, the mismatch detection is enhanced.

Optionally, the attention-based machine learning model comprises a cross-attention module. The cross-attention module may be configured to learn a correlation between the features of the input and the features of the reference model in order to detect a potential mismatch.

Optionally, the cross-attention module is configured to carry out sparse cross-attention on a subset of the features smaller than the features. The subset of the features contains strictly less information than the features. As cross-attention may be expensive to train, the proposed sparse cross-attention enables to significantly decrease the training cost by restricting the features on which cross-attention is carried out. Optionally, the features of the subset may be chosen on purpose, e.g. as those which have a greater impact on detecting the mismatch.

Several methods for determining the subset are encompassed. Optionally, the attention-based machine learning model comprises an auxiliary machine learning model configured to determine the subset. Accordingly, the subset can be determined based on any desired loss function, e.g. in relation to how the features represent the input and the reference model. In other embodiments, the subset may be determined based on a distance between the features of the reference model and the features of the input.

Optionally, the features comprise positional information extracted from the reference model. The positional information may be included directly or indirectly in the features. The positional information enhances the mismatch detection, notably by facilitating finding local correspondences in the features extracted from the reference model.

Optionally, the system is further configured to localize the anomaly in the object, e.g. by outputting a bounding box of the anomaly in the input. A bounding box is suitable for any type of input which can be visually represented. However, the location of the anomaly may be outputted in any other way, e.g. with coordinates, with a mask, etc.

Optionally, the input comprises an image, a sound, a video, an electrical signal, or a combination thereof.

Optionally, the input comprises a two-dimensional image of the instance of the object, the reference model comprises a three-dimensional model of the object, and the extracting the features comprises generating a plurality of two-dimensional projections from the reference model and extracting features from the plurality of two-dimensional projections. These embodiments are particularly adapted to manufacturing inspection, where a part is manufactured based on available 3D computer-assisted design (CAD) data and the object can be photographed or otherwise imaged after manufacturing. The plurality of two-dimensional projections corresponds to the aforementioned plurality of reference representations.

Optionally, the system is further configured to estimate a viewpoint of the two-dimensional image.

The present disclosure is further directed to a computer-implemented method for identifying an anomaly in an instance of an object, given an input representing the instance and a reference model of the object, the method comprising:

- extracting features from the input and the reference model;
- inputting the features to an attention-based machine learning model configured to detect a mismatch between the input and the at least one reference representation;
- identifying an anomaly in the instance when said mismatch is detected.

The method may have all or part of the features presented above in relation to the system.

The present disclosure is further directed to a training method for training the aforementioned system, wherein the auxiliary machine learning model is trained using at least one of a supervised training based on different reference representations generated from the reference model, and an unsupervised training based on the reference model and the input, optionally wherein pseudo-labels are assigned to the input. A combination of the supervised training and the unsupervised training may be referred to as a semi-supervised training.

In the proposed supervised training of the auxiliary machine learning model, the ability to generate a plurality of reference representations from the reference model, and the corresponding ground-truth information (e.g. presence or absence of an anomaly, and the characteristics thereof as the case may be), is leveraged. In addition or as an alternative, in the proposed unsupervised training of the auxiliary machine learning model, training based on the reference model and the input can be carried out, e.g. by assigning pseudo-labels (e.g. predicted labels) to the input. In either case, any suitable loss function may be used, e.g. a contrastive loss function. A contrastive loss function is configured to map representations that model the similarity of input items.

The present disclosure is further directed to a computer program set including instructions for executing the steps of either one of the aforementioned methods when said program set is executed by at least one computer. This program can use any programming language and take the form of source code, object code or a code intermediate between source code and object code, such as a partially compiled form, or any other desirable form.

The present disclosure is further directed to a recording medium readable by at least one computer and having recorded thereon at least one computer program including instructions for executing the steps of either one of the aforementioned methods. The recording medium can be any entity or device capable of storing the program. For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is an overview of an anomaly detection task for a physical object;
- FIG. 2 is a diagram illustrating a system and method for identifying an anomaly in an instance according to an embodiment;

- FIG. 3 is a diagram illustrating a detail of the system and method of FIG. 2;
- FIG. 4 illustrates a visualization of top-k sparse attention-span.

DETAILED DESCRIPTION OF EMBODIMENTS

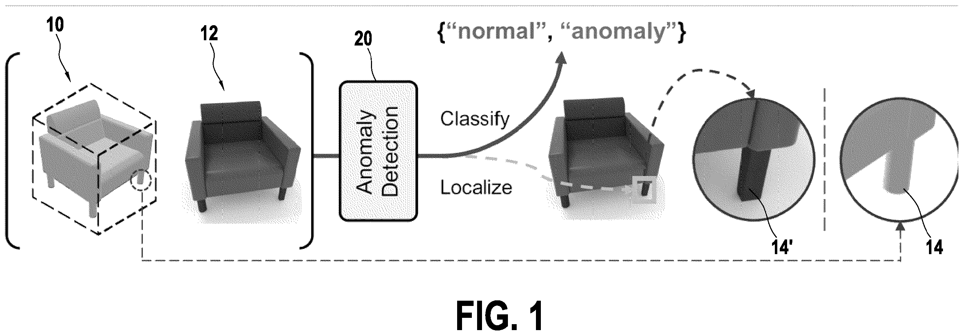

A method and system for identifying an anomaly in an instance of an object, given an input representing the instance and a reference model of the object, is described with reference to Figs. 1-4. Although applicable to a variety of objects and input types, such as images, videos, audio signals, electrical signals or a combination thereof, the present disclosure takes, without loss of generality, the example of physical objects. A reference model of the object may comprise a three-dimensional model of the object (e.g. CAD data, a point cloud or the like) and an instance of the object may be manufactured according to that reference model. An input representing the instance may comprise a two-dimensional image of that instance, e.g. a photograph. In the following, the input will also be referred to as the query image, because it is the image from which the possible anomaly is to be identified.

As shown in Fig. 1, the proposed system and method aim to identify, and optionally localize, an anomaly in a query image (input) by comparing it to a reference model, e.g. a reference shape of the object. The reference model 10 and the input 12 are inputted to the anomaly detection system 20, which outputs an anomaly indicator (e.g. "normal" or "anomaly") and optionally a localization of a detected anomaly. In Fig. 1, the anomalous region is shown in a bounding box. In this example, the right leg 14' of the instance of the armchair is rectangular, unlike the cylindrical leg 14 in the reference model.

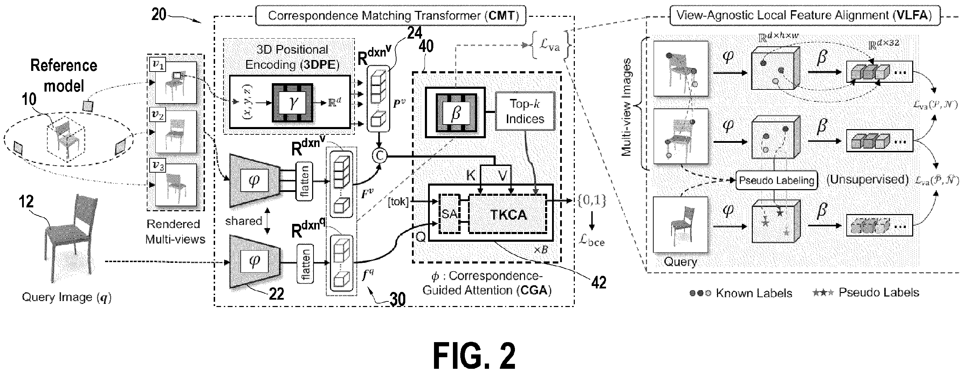

Figure 2 shows the overall architecture of the proposed method and system 20 for conditional AD task according to an embodiment. As previously mentioned, the proposed method and system comprise extracting features 30 from the input 12 and the reference model 10, inputting the extracted features to an attention-based machine learning model 40 configured to detect a mismatch between the input 12 and the reference model 10, and identifying an anomaly in the instance 12 when said mismatch is detected.

As mentioned previously, the input 12 may be a 2D image of the instance. Specifically, let $q \in \mathbb{R}^{3 \times H \times W}$ be an $H \times W$ dimensional RGB image of the instance of an object captured from an unknown viewpoint. The aim of anomaly detection is to obtain a classifier $\psi$ that takes in the query image q (or more generally the input 12) and the reference model 10 and predicts a ground-truth binary anomaly label $y \in \{0,1\}$.

As mentioned above, the extracting features from the reference model 10 comprises generating at least one reference representation $v$ from the reference model 10, the at least one reference representation having the same dimensionality as the input, and extracting features from the at least one reference representation. Thus, let

$$\mathcal{V} = \{v_n\}_{n=1}^{N}$$

be a set of $H \times W$ dimensional images. These reference representations may be rendered from the reference model, e.g. at N regularly sampled viewpoints on a hemisphere. Thus, the classifier is $\psi : \mathbb{R}^{3 \times H \times W} \times \mathbb{R}^{N \times 3 \times H \times W} \to [0,1]$.
Thus, a plurality of two-dimensional projections (the multi-view images) are generated from the reference model.

Given a labeled training set $\mathcal{D}$ including $|\mathcal{D}|$ query, reference model, and label triplets (q,V,y), the classifier can be optimized by minimizing the loss term:

$$\mathcal{L}_{\text{bce}} = \sum_{(q,\mathcal{V},y) \in \mathcal{D}} \ell_{bce}(\psi(q,\mathcal{V}),y) \tag{1}$$

where $\ell_{\text{bce}}$ is the binary cross-entropy loss function.

An ideal classifier $\psi$ should identify subtle shape irregularities in q by finding the relevant portions (e.g. patches) in V for each portion in q and comparing them. One possible design to relate patches across query and multi-view images is to use an attention-based machine learning module, in particular a cross-attention module, as will be detailed hereinafter. In particular, one can use local features extracted from q as query and ones from V as key and value matrices as input to the scaled dot-product attention in [REF. 1] to cross-correlate them while predicting the anomaly label. This design can implicitly capture such cross-correlations between patches from only image-level supervision when trained with the loss in Eq. (1).

In order to ensure a greater consistency between the extracted features, the features may be extracted from the input 12 and the reference model 10 by a common feature encoder 22, denoted as $\varphi$. In an embodiment, ResNet18 feature pyramid network [REF. 2] is used as the feature encoder, which is thus denoted as $\varphi : \mathbb{R}^{3 \times H \times W} \to \mathbb{R}^{d \times h \times w}$. The input of the feature encoder 22 may be down-scaled (e.g. 8 times) through the network ($h = H/8$ and $w = W/8$). The features extracted from $q$ and from each $v$, $\varphi(q)$ and $\varphi(v)$ respectively, may be reshaped to be $d \times n^q$ dimensional matrices, denoted as $f^q$ and $f^v$ respectively, where $n^q = h \times w$. Each column in $f^q$ and $f^v$ corresponds to a $d$ dimensional local feature. $f[.,j]$ notation is used to indicate $j$-th local feature or patch encoding, as each encoding approximately corresponds to a local patch in the input image due to locality in the encoder (e.g. convolutional encoder). More generally, the extracting the features comprises extracting features from the plurality of two-dimensional projections.

While the multi-view representation allows for a simple and efficient model design through a shared feature encoder 22 for anomaly detection, it may also drop out some information from the reference model: specifically, it also makes 3D information less accessible and hence hampers relating local features across different views accurately. To mitigate this problem, it is desirable to complement the multi-view images with 3D information. More generally, the features are complemented to include positional information 24 extracted from the reference model.

For instance, for each patch encoding $f^v[.,j]$, the corresponding image patch in $v$ is located and then the 3D position of the corresponding patch $x_j \in \mathbb{R}^3$ is computed in the world coordinates by using the known camera intrinsic and extrinsic parameters. Then a higher-dimensional vector for each $x_j$ is obtained, e.g. by Fourier encoding, and further processed through an MLP block to obtain a $d$ dimensional 3D position encoding, namely the positional information 24. Formally, the joint mapping is denoted as $\gamma : \mathbb{R}^3 \to \mathbb{R}^d$.

The proposed position encoding encodes 3D object geometry in the world space. For each $f^v$ including $n^q$ patch encodings, a corresponding $d \times n^q$ dimensional matrix $p^v$ is computed. For the next steps, $f^v$ and $p^v$ are gathered over $N$ views, and concatenated along their second dimensions, resulting in $F^v \in \mathbb{R}^{d \times n^v}$ and $P^v \in \mathbb{R}^{d \times n^v}$ respectively where $n^v = N \times n^q$. Augmenting $F^v$ with $P^v$ results in a novel hybrid 2D-3D representation by incorporating explicit 3D information into the 2D multi-view images, i.e. more generally incorporating explicit positional information in the features.

The attention-based machine learning model 40, denoted as $\phi$ in Fig. 2, takes in $f^q$, $F^v$, $P^v$ and predicts the anomaly label while efficiently computing the correlations across two modalities. The attention-based machine learning model $\phi$ may comprise $B$ consecutive blocks 42, e.g. transformer blocks, where each block contains multiple operations and is indexed by subscript b. Each block may comprise at least one of a self-attention module SA and a cross-attention module TKCA.

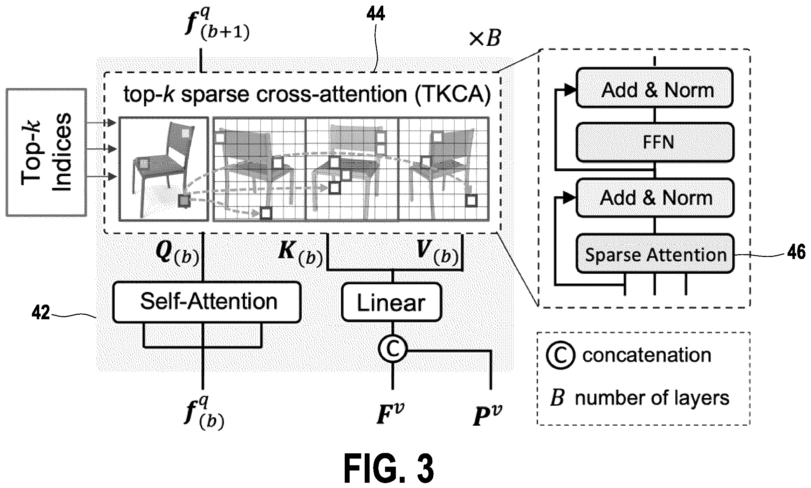

Figure 3 illustrates one block 42 having index b in more details according to an embodiment. The blocks may be identical to one another or not. In this embodiment, the block b starts with concatenating $F^v$ and $P^v$ along their first dimension, then the resulting $2\,d \times n^v$ dimensional matrix is reduced to $d \times n^v$ dimensional $\overline{F}^v$ matrix through a linear projection layer $\alpha^{(b)} : \mathbb{R}^{2d} \to \mathbb{R}^d$ (Eq. (2)). In parallel, self-attention operation (SA) is applied to the query features $f^q_{(b)}$ where $f^q_{(1)} = f^q$ (Eq. (3)). Then, the block $b$ computes the query $Q_{(b)} \in \mathbb{R}^{d \times n^q}$ (Eq. (4)) and key-value matrices $K_{(b)} \in \mathbb{R}^{d \times n^v}$, $V_{(b)} \in \mathbb{R}^{d \times n^v}$ (Eq. (5)) by applying the linear projections $W^{Q,K,V} \in \mathbb{R}^{d \times d}$ respectively.

$$\overline{F}^v_{(b)} \leftarrow \alpha_{(b)}\left(\begin{bmatrix} F^v \\ P^v \end{bmatrix}\right) \tag{2}$$

$$\overline{f}^q_{(b)} \leftarrow \mathrm{SA}(f^q_{(b)}) \tag{3}$$

$$Q_{(b)} \leftarrow W^Q \overline{f}^q_{(b)} \tag{4}$$

$$K_{(b)} \leftarrow W^K \overline{F}^v_{(b)}, \; V_{(b)} \leftarrow W^V \overline{F}^v_{(b)} \tag{5}$$

$$O_{(b)} \leftarrow \mathrm{TKCA}(Q_{(b)}, K_{(b)}, V_{(b)}, M) \tag{6}$$

$$O_{(b)} \leftarrow \mathrm{Norm}(O_{(b)} + Q_{(b)}) \tag{7}$$

$$O_{(b)} \leftarrow \text{Norm}(\text{FFN}(O_{(b)}) + O_{(b)}) \tag{8}$$

$$f^q_{(b+1)} \leftarrow O_{(b)} \tag{9}$$

Next, $Q_{(b)}, K_{(b)}, V_{(b)}$ are inputted to a cross-attention module 44 referred to as TKCA (Eq. (6)). In this embodiment, unlike the vanilla cross-attention module in standard transformers [REFS. 1, 3] ingesting all tokens for the attention computation, which is inefficient for anomaly detection and may introduce noisy interactions with irrelevant features, potentially degrading performance, the cross-attention module is configured to carry out sparse cross-attention 46 on a subset of the features smaller than the features. Specifically, TKCA, standing for top-k sparse cross-attention, calculates the attention between query and only a small subset of relevant multi-view features using a similarity matrix $M$, e.g.:

$$\text{TKCA}(Q,K,V,M) = softmax\left(\mathcal{T}^M_k\left(\frac{QK}{\sqrt{d}}\right)\right)V \tag{10}$$

where $\mathcal{T}^M_k$ is given by:

$$\mathcal{T}^M_k(A)[ij] = \begin{cases} A[ij], & \text{if } M[ij] \in \text{top}_k(M[i.]) \\ -\infty, & \text{otherwise} \end{cases} \tag{11}$$

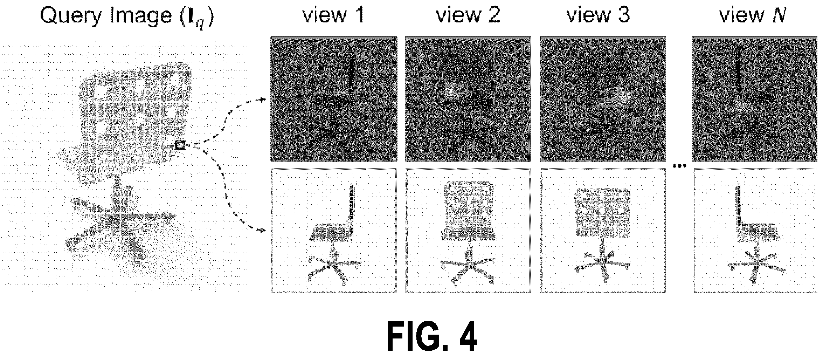

where $\text{top}_k(M[i.])$ operation selects the $k$ most similar features from multi-view representation for $i$-th query feature. This is illustrated in Fig. 4, which depicts, for a query point shown in the query image, similarity heatmaps (first row) and top-k attention-span (second row) across multiple views.

As shown in Fig. 2, optionally, the attention-based machine learning model $\phi$ comprises an auxiliary machine learning model $\beta$ configured to determine the subset (e.g. the the $k$ most similar features). In the present embodiment, to compute $M$, the auxiliary machine learning model $\beta: \mathbb{R}^d \rightarrow \mathbb{R}^d$, e.g. instantiated as a four layered MLP followed by a final channel-wise normalization, projects $f^q$ and each view in $F^v$ to a view-agnostic feature space where images corresponding to same object part in 3D have similar representations regardless of their viewpoint. The similarity between the query and multi-view patches may be obtained by computing the dot product between their projected features:

$$M = \beta(f^q)^{\text{T}}\beta(F^v) \in \mathbb{R}^{n^q \times n^v}. \tag{12}$$

TKCA differs from other transformer architectures using sparse attention in two aspects. TCKA chooses the top-$k$ elements based on a different source of information, geometric correspondences computed across two modalities, and enables an efficient computation of the cross-attention, as the same $M$ may be used throughout the consecutive blocks.

With reference back to Fig. 3, after the cross-correlation, standard residual addition, normalization and feedforward (FFN) layers may be applied to obtain $f^q$ as input to the next block $b$ +1 (Eqs. (7) to (9)). Multiple heads may be used, in which case the outputs from multi-head attention are concatenated and then the final attention results are derived through linear projection. Through the transformer blocks, the output state of the [tok] token develops a consolidated representation enriched by learned shape-image correlation, which is used as input to the classification head.

Thus, the proposed method and system can suitably identify an anomaly in an input representing an instance of an object.

The machine learning models mentioned above may be trained using any suitable technique and any suitable training dataset. For instance, the attention-based machine learning model and the auxiliary machine learning model may be trained jointly, preferably end-to-end, to ensure that the attention-based machine learning model can utilize the learned correspondences acquired by the auxiliary machine learning model in real time. In other embodiments, it is possible to train the auxiliary machine learning model separately, e.g. as a generic machine learning model with the goal of aligning the view representation.

The training may be supervised and/or unsupervised. Typically, a training dataset may comprise reference models, each reference model being associated with one or more inputs representing an instance of the object defined by the reference model, and optionally a label, e.g. an indication of whether (and possibly where) there is an anomaly in the input.

It is possible to build such a training dataset as follows: starting from a dataset of reference models with part annotations (e.g. PartNet [REF. 4]), anomalous designs can be created by applying at least one deformation to at least one part of the object. The deformations may be geometric deformations, e.g. selected from the group consisting of:

- positional anomaly: applying a translation to a part. The part and/or the translation may be randomly selected;
- rotational anomaly: applying a rotation to a part. The part and/or the rotation may be randomly selected;
- broken or damaged parts: a part may be fractured, e.g. by subtracting a random spherical or cubical geometric primitive from the part mesh, e.g. using Boolean subtraction [REF. 5];
- component swapping: swapping common parts across different reference models (e.g. a back-connector of a chair is exchanged with a back-connector of another chair), simulating an incorrect assembly during manufacturing;
- missing component: removing a part from the reference model.

The reference models and the anomalous designs may then be rendered, optionally with a variety of textures and/or from various viewpoints, to obtain inputs representing normal and anomalous instances of the object.

With reference to the right-hand portion of Fig. 2, it is desirable to train the auxiliary machine learning model $\beta$ so that the subset of features should not be selected randomly, but should be representative of the most relevant features used for anomaly detection. In this respect, a training method for the proposed system may be configured to densely align corresponding parts between query images and related views (i.e. the reference representations). In particular, training the auxiliary machine learning model $\beta$ implies learning to map $f^q$ and $f^v$ to a view-agnostic space such that their local features corresponding to the same object part are mapped to a similar point regardless of the viewpoint from which the image is captured.

As the viewpoints of $q$ are unknown, the ground-truth correspondences between query and reference views cannot be obtained through inverse rendering.

Thus, it is proposed that the auxiliary machine learning model is trained using an unsupervised training based on the reference model and the input, wherein pseudo-labels are assigned to the input. Specifically, a self-labeling strategy may be used to generate pseudo-correspondences by finding the most similar local feature in the reference view to each local feature in the query at each training step, after mapping their features to the view-invariant space and normalizing them:

$$\hat{c}_i = \underset{j}{argmax} \; z_i^{q\mathrm{T}} z_j^v, \tag{13}$$

where $z_i^q = \frac{\beta(f^q[.i])}{\|\beta(f^q[.i])\|}$ and $z_j^v = \frac{\beta(f^v[.j])}{\|\beta(f^v[.j])\|}$. A pseudo-label is computed for each $z_i^q$ and stored in a look-up table $\hat{\mathcal{P}}$ $(q,v,i) = \hat{c}_i$. Another look-up table $\hat{\mathcal{N}}$ $(q,v,i)$ stores the remaining set of reference view and index values that are not the corresponding location. Then, using $\hat{\mathcal{P}}, \hat{\mathcal{N}}$ as positive and negative correspondences respectively, it is possible to minimize a contrastive loss $\ell_{va(q,v)}$ over each $q$-$v$ pair:

$$\sum_{i=1}^{n^q} - \log \frac{exp(z_i^{qT} z_+^v / \tau)}{exp(z_i^{qT} z_+^v / \tau) + \sum_{j \in \hat{\mathcal{N}}(q,v,i)} exp\left(z_i^{qT} z_j^v / \tau\right)}, \tag{14}$$

where $\tau$ is a temperature parameter and $z_+^v = z_{\hat{\mathcal{P}}(q,v,i)}^v$. Due to the cost of computing the pseudo-correspondences for all query features across all views, they may be computed only for a subset of query features across (randomly) sampled views at each training iteration.

Learning correspondences through self-learning alone in the presence of the domain gap between query and reference views is a noisy process. Hence, as an alternative or in combination, the auxiliary machine learning model may be trained using a supervised training based on different reference representations generated from the reference model. Specifically, the known viewpoints of the multi-view images are exploited by densely aligning their local features in each view pair $v,v'$ after computing the ground truth dense correspondences between them and discarding the ones that are occluded in one of the views. The key assumption here is that aligning different views by using their ground truth labels enables a more accurate correspondence learning between query images and views, as the parameters of the projection

$\beta$ are shared across two domains. As before, two look-up tables $\mathcal{P}$ (v,v') and $\mathcal{N}$ (v,v') can be formed to store the positive and negative correspondences between two views. The look-up tables may be randomly subsampled. After mapping them to the view-invariant space and normalizing them, Eq. (14) may be computed and minimized for the pairs in the look-up tables.

For end-to-end training, the objective in Eq. (1) may be rewritten as:

$$\mathcal{L}_{\text{bce}}(\mathcal{D}) + a\mathcal{L}_{va}(\hat{\mathcal{P}},\hat{\mathcal{N}}) + (1-a)\mathcal{L}_{va}(\mathcal{P},\mathcal{N})$$

where $\mathcal{L}_{va}(\hat{\mathcal{P}},\hat{\mathcal{N}})$ and $\mathcal{L}_{va}(\mathcal{P},\mathcal{N})$ are the alignment loss functions over query-view pairs and view-view pairs respectively, $a$ is a loss balancing weight set e.g. to 0.5.

Thus, the auxiliary machine learning model may be trained with view-agnostic local feature alignment.

Experiments were conducted by the inventors with k=100 in TKCA, three blocks in the attention-based machine learning model (B=3), each applying 8-headed attention, N=10 views during training and N=20 views during testing. More generally, k may vary from 1 to 200, e.g. between 50 and 200. Having k greater than 200, in particular k being equal to the total number of available tokens, results in deteriorated performance, showing that the proposed sparse attention is effective in eliminating the noisy patches by using only the k top-related ones. Besides, N may be between 10 and 30, preferably between 15 and 25, at test time.

Test results showed that an accuracy improvement was obtained by the proposed method over prior art methods. In addition, the proposed refinements (including positional information in the features, using a cross-attention module, carrying out sparse cross-attention on a subset of the features, specifically training the auxiliary machine learning model) provide further performance improvements. With all the proposed features, the proposed method reaches an accuracy of 74.8%, where human accuracy for the same task and the same subset is 70.6%. This shows the effectiveness of the proposed method.

As a side product of establishing the correspondences across the query image and views in the proposed method, it is possible to estimate a viewpoint of the two-dimensional image, e.g. to estimate the camera viewpoint in the query image with respect to the reference model. To this end, it is possible to compute dense correspondences between the query image and each view image, and then calculate the distance between the pixel coordinates of each point in the query image and their predicted correspondences in the multi-view images, and choose the view with the lowest average distance as the approximate viewpoint. As a comparative example, it is possible to train a ResNet with the viewpoint supervision on the normal images only, and evaluate it on the test normal query images. The proposed method, trained with no viewpoint supervision, achieves a significantly better accuracy than the ResNet baseline (47% vs 89%) when predicting the closest view; this suggests that the proposed system implicitly learns to relate the query image with the closest views.

In order to localize the anomaly in the input, the attention-based machine learning model may be adapted to use a bounding box regression head (e.g. a 4-layer MLP). The bounding box regression head may be jointly trained with the other machine learning model parameters, e.g. by using L1 regression and generalized IoU loss. Moreover, jointly learning the classification and localization further boosts the classification performance.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A system (20) for identifying an anomaly in an instance of an object, given an input (12) representing the instance and a reference model (10) of the object, the system (20) being configured to:

    - extract features from the input and the reference model;
    - input the features to an attention-based machine learning model (40) configured to detect a mismatch between the input and the reference model;
    - identify an anomaly in the instance when said mismatch is detected.

2. The system of claim 1, wherein the extracting features from the reference model (10) comprises generating at least one reference representation from the reference model (10), the at least one reference representation having the same dimensionality as the input (12), and extracting features from the at least one reference representation.

3. The system of claim 1 or 2, wherein the features are extracted from the input (12) and the reference model (10) by a common feature encoder (22).

4. The system of any one of claims 1 to 3, wherein the attention-based machine learning model (40) comprises a self-attention module (SA).

5. The system of any one of claims 1 to 4, wherein the attention-based machine learning model (40) comprises a cross-attention module (TKCA).

6. The system of claim 5, wherein the cross-attention module (TKCA) is configured to carry out sparse cross-attention on a subset of the features smaller than the features.

7. The system of claim 6, wherein the attention-based machine learning model (40) comprises an auxiliary machine learning model ($\beta$) configured to determine the subset.

8. The system of any one of claims 1 to 7, wherein the features comprise positional information (24) extracted from the reference model.

9. The system of any one of claims 1 to 8, further configured to localize the anomaly in the object, optionally by outputting a bounding box of the anomaly in the input.

10. The system of any one of claims 1 to 9, wherein the input (12) comprises an image, a sound, a video, an electrical signal, or a combination thereof.

11. The system of any one of claims 1 to 10, wherein the input (12) comprises a two-dimensional image of the instance of the object, the reference model (10) comprises a three-dimensional model of the object, and the extracting the features comprises generating a plurality of two-dimensional projections from the reference model and extracting features from the plurality of two-dimensional projections, and optionally wherein the system is further configured to estimate a viewpoint of the two-dimensional image.

12. A computer-implemented method for identifying an anomaly in an instance of an object, given an input representing the instance and a reference model of the object, the method comprising:

   - extracting features from the input and the reference model;
   - inputting the features to an attention-based machine learning model configured to detect a mismatch between the input and the reference model;
   - identifying an anomaly in the instance when said mismatch is detected.

13. A training method for training the system of claim 7, wherein the auxiliary machine learning model ($\beta$) is trained using at least one of a supervised training based on different reference representations generated from the reference model, and an unsupervised training based on the reference model and the input, optionally wherein pseudo-labels are assigned to the input.

14. A computer program set including instructions for executing the steps of the method of claim 12 or 13 when said program set is executed by at least one computer.

15. A recording medium readable by at least one computer and having recorded thereon at least one computer program including instructions for executing the steps of the method of claim 12 or 13.

{"normal", "anomaly"}

10

12

20

Anomaly Detection

Classify

Localize

14'

14

EP 4 650 983 A1

**FIG. 1**

**FIG. 2**

**FIG. 3**

Query Image ($\mathbf{I}_q$)   view 1   view 2   view 3   view $N$

FIG. 4

Europäisches
Patentamt

European
Patent Office

Office européen
des brevets

## EUROPEAN SEARCH REPORT

**Application Number**

EP 24 30 5767

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bhunia Ankan Kumar: "GitHub - VICO-UoE/Looking3D at 05cc293f0bb905717ebd991743dcefd465dd9b87", , 20 March 2024 (2024-03-20), XP093211739, https://github.com/VICO-UoE/Looking3D/commits/main/?after=308167123847b84ec18f1dd86069703b95c3a218+34 Retrieved from the Internet: URL:https://github.com/VICO-UoE/Looking3D/tree/05cc293f0bb905717ebd991743dcefd465dd9b87 [retrieved on 2024-10-04] * the whole document * | 1-15 | INV. G06F16/55 G06N3/045 G06N3/0464 G06N3/0495 G06N3/0895 G06N3/09 |
| X | & Bhunia Ankan Kumar: "Looking3D/demo.py at 05cc293f0bb905717ebd991743dcefd465dd9b87 . VICO-UoE/Looking3D . GitHub", , 20 March 2024 (2024-03-20), XP093211828, Retrieved from the Internet: URL:https://github.com/VICO-UoE/Looking3D/blob/05cc293f0bb905717ebd991743dcefd465dd9b87/demo.py [retrieved on 2024-10-15] * the whole document * | 1-15 | |
| | | | TECHNICAL FIELDS SEARCHED (IPC) |
| X | & Bhunia Ankan Kumar: "VICO-UoE / Looking3D train.py as raw code", , 20 March 2024 (2024-03-20), XP093214933, Retrieved from the Internet: URL:https://raw.githubusercontent.com/VICO-UoE/Looking3D/05cc293f0bb905717ebd991743dcefd465dd9b87/train.py [retrieved on 2024-10-04] * the whole document * | 1-15 | G06F G06N |

-/--

The present search report has been drawn up for all claims

| Place of search | Date of completion of the search | Examiner |
|---|---|---|
| The Hague | 15 October 2024 | Ntarlagiannis, V |

EPO FORM 1503 03.82 (P04C01)

| | Europäisches Patentamt European Patent Office Office européen des brevets | **EUROPEAN SEARCH REPORT** | **Application Number** EP 24 30 5767 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | & Bhunia Ankan Kumar: "Looking3D/models/CGA.py at 05cc293f0bb905717ebd991743dcefd465dd9b87 . VICO-UoE/Looking3D . GitHub", , 20 March 2024 (2024-03-20), XP093211839, Retrieved from the Internet: URL:https://github.com/VICO-UoE/Looking3D/blob/05cc293f0bb905717ebd991743dcefd465dd9b87/models/CGA.py [retrieved on 2024-10-04] * the whole document * | 1-15 | |
| X | & Bhunia Ankan Kumar: "VICO-UoE / Looking3D Public Looking3D / models / xformer.py", , 20 March 2024 (2024-03-20), XP093214861, Retrieved from the Internet: URL:https://github.com/VICO-UoE/Looking3D/blob/05cc293f0bb905717ebd991743dcefd465dd9b87/models/xformer.py [retrieved on 2024-10-15] * the whole document * | 1-15 | |
| X | & Bhunia Ankan Kumar: "Commits . VICO-UoE/Looking3D . GitHub", , 20 March 2024 (2024-03-20), XP093211754, Retrieved from the Internet: URL:https://github.com/VICO-UoE/Looking3D/commits/main/?after=308167123847b84ec18f1dd86069703b95c3a218+34 [retrieved on 2024-10-04] * the whole document * ----- | 1-15 | TECHNICAL FIELDS SEARCHED (IPC) |
| X | US 2022/383128 A1 (GONZALES DANIEL S [US] ET AL) 1 December 2022 (2022-12-01) * the whole document * ----- | 1-15 | |

The present search report has been drawn up for all claims

| Place of search | Date of completion of the search | Examiner |
|---|---|---|
| The Hague | 15 October 2024 | Ntarlagiannis, V |

EPO FORM 1503 03.82 (P04C01)

page 2 of 2

## ANNEX TO THE EUROPEAN SEARCH REPORT
## ON EUROPEAN PATENT APPLICATION NO.

EP 24 30 5767

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | Publication date | Patent family member(s) | Publication date |
|---|---|---|---|
| US 2022383128 A1 | 01-12-2022 | CN 117413292 A | 16-01-2024 |
| | | DE 112022002858 T5 | 14-03-2024 |
| | | JP 7565462 B2 | 10-10-2024 |
| | | JP 2024522120 A | 11-06-2024 |
| | | KR 20240001241 A | 03-01-2024 |
| | | US 2022383128 A1 | 01-12-2022 |
| | | WO 2022250808 A1 | 01-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASHISH VASWANI** ; **NOAM SHAZEER** ; **NIKI PARMAR** ; **JAKOB USZKOREIT** ; **LLION JONES** ; **AIDAN N GOMEZ** ; **LUKASZ KAISER** ; **ILLIA POLOSUKHIN**. Attention is all you need. *NeurIPS*, 2017
- **TSUNG-YI LIN** ; **PIOTR DOLLAR** ; **ROSS GIRSHICK** ; **KAIMING HE** ; **BHARATH HARIHARAN** ; **SERGE BELONGIE**. Feature pyramid networks for object detection. *CVPR*, 2017
- **ALEXEY DOSOVITSKIY** ; **LUCAS BEYER** ; **ALEXANDER KOLESNIKOV** ; **DIRK WEISSENBORN** ; **XIAOHUA ZHAI** ; **THOMAS UNTERTHINER** ; **MOSTAFA DEHGHANI** ; **MATTHIAS MINDERER** ; **GEORG HEIGOLD** ; **SYLVAIN GELLY et al.** An image is worth 16x16 words: Transformers for image recognition at scale. *ICLR*, 2021
- **KAICHUN MO** ; **SHILIN ZHU** ; **ANGEL X CHANG** ; **LI YI** ; **SUBARNA TRIPATHI** ; **LEONIDAS J GUIBAS** ; **HAO SU**. Partnet: A large-scale benchmark for fine-grained and hierarchical part-level 3D object understanding. *CVPR*, 2019
- **NIKOLAS LAMB** ; **SEAN BANERJEE** ; **NATASHA KHOLGADE BANERJEE**. Deepjoin: Learning a joint occupancy, signed distance, and normal field function for shape repair. *ACM TOG*, 2022